(19) Europäisches Patentamt
European Patent Office
Office européen des brevets

(11) Veröffentlichungsnummer: **0 025 141**
**B1**

(12) # EUROPÄISCHE PATENTSCHRIFT

(45) Veröffentlichungstag der Patentschrift: **12.05.82**

(51) Int. Cl.³: **C 07 C 101/36**, C 07 C 103/46, A 01 N 53/00

(21) Anmeldenummer: **80104897.6**

(22) Anmeldetag: **16.08.80**

(54) **Verfahren zur Herstellung von 1-Amino-cyclopropan-carbonsäure und deren Derivaten.**

(30) Priorität: **06.09.79 DE 2936038**

(43) Veröffentlichungstag der Anmeldung: **18.03.81 Patentblatt 81/11**

(45) Bekanntmachung des Hinweises auf die Patenterteilung: **12.05.82 Patentblatt 82/19**

(84) Benannte Vertragsstaaten: **BE CH DE FR GB IT LI NL**

(56) Entgegenhaltungen:
**DE-A1-2 724 734**
**DE-B-1 289 046**
**GB-A-1 047 267**

(73) Patentinhaber: **BAYER AG, Zentralbereich Patente, Marken und Lizenzen, D-5090 Leverkusen 1, Bayerwerk (DE)**

(72) Erfinder: **Gallenkamp, Bernd, Dr., Claudiusweg 5, D-5600 Wuppertal-1 (DE)**

EP 0 025 141 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von 1-Amino-cyclopropancarbonsäure und deren Derivaten

Die Erfindung betrifft ein neues Verfahren zur Herstellung der bekannten 1-Amino-cyclopropan-carbonsäure und deren weitgehend bekannten Derivaten.

Es ist bekannt, daß man 1-Amino-cyclopropan-carbonsäure erhält, wenn man $\alpha$-Acylamino-acrylsäureester mit Diazomethan umsetzt, die hierbei gebildeten Pyrazoline pyrolysiert und die resultierenden 1-Acylamino-cyclopropan-carbonsäureester verseift (vergleiche Monatshefte für Chemie [Wien] 103 [1972], 228 – 291).

Die Verwendung von Diazomethan ist jedoch wegen seiner Toxizität und Explosivität mit hohen Risiken behaftet.

Es ist weiter bekannt, daß man 1-Amino-cyclopropan-carbonsäureester durch Hydro·yse von 1-Isocyano-cyclopropan-carbonsäureestern herstellen kann, welche man aus Isocyano-essigsäureestern und 1,2-Dibrom-ethan in Gegenwart starker Basen, wie z. B. Natriumhydrid, erhält (vergleiche Liebigs Ann. Chem. 1973, 611 – 618).

Gegen die Verwendung von 1,2-Dibrom-ethan spricht jedoch die im Tierversuch nachgewiesene Cancerogenität dieser Verbindung.

Ferner ist bekanntgeworden, daß man 1-Amino-cyclopropan-carbonsäure erhält, wenn man N-Butoxycarbonyl-methionin-methylester mit Fluorsulfonsäure-methylester S-alkyliert, dann mit Natriumhydrid zu 1-Butoxycarbonyl-amino-cyclopropan-carbonsäure-methylester cyclisiert und anschließend verseift (vergleiche Synthesis 1978, 46). Fluorsulfonsäure-methylester und Natriumhydrid sind jedoch für den technischen Bedarf wenig geeignete Ausgangsstoffe.

Es wurde nun gefunden, daß man die bekannte 1-Amino-cyclopropan-carbonsäure und deren weitgehend bekannte Derivate zur Formel

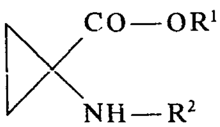

(I)

in welcher

$R^1$ für Wasserstoff oder Alkyl steht und
$R^2$ für Wasserstoff oder einen Rest $-CO-R^3$ steht,
worin $R^3$ für Wasserstoff, Alkyl, Aryl oder Alkoxy steht,

erhält, wenn man 2-Acylamino-4-methylthio-butansäureester (»Acyl-methioninester«) der Formel

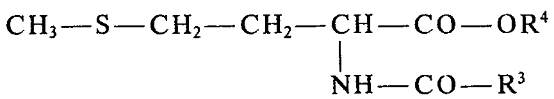

(II)

in welcher

$R^3$ die oben angegebene Bedeutung hat und
$R^4$ für Alkyl steht,

nacheinander mit Dimethylsulfat und einem Alkalialkoholat gegebenenfalls in Gegenwart eines Verdünnungsmittels bei Temperaturen zwischen 80°C und 150°C umsetzt, gegebenenfalls anschließend mit wäßrigem Alkalihydroxid oder Erdalkalihydroxid bei Temperaturen zwischen 70°C und 150°C verseift, das dabei anfallende Reaktionsgemisch bei Temperaturen zwischen 0°C und 30°C mit konzentrierter Salzsäure ansäuert und das entstehende Hydrochlorid anschließend in methanolischer Lösung bei Temperaturen zwischen –5°C und +20°C mit Propylenoxid behandelt.

Die Formel (II) schließt die verschiedenen möglichen Stereoisomeren (optische Isomeren) und deren Mischungen (Racemate) mit ein.

Es ist als ausgesprochen überraschend zu bezeichnen, daß sich 1-Amino-cyclopropan-carbonsäure und deren Derivate der Formel (I) nach dem erfindungsgemäßen Verfahren in sehr hoher Ausbeute herstellen lassen, denn aufgrund des bekannten Standes der Technik mußte damit gerechnet werden, daß beim Einsatz der im Vergleich zu Alkalihydriden wesentlich schwächer basischen Alkalialkoholate kein Ringschluß eintreten würde.

Das erfindungsgemäße Verfahren besitzt eine Reihe von Vorteilen. So sind die als Ausgangsprodukte benötigten Substanzen auch in größeren Mengen in einfacher Weise zugänglich und auch im technischen Maßstab problemlos zu handhaben. Ferner ist der zur Durchführung des erfindungsgemäßen Verfahrens erforderliche apparative Aufwand gering, und die Aufarbeitung des nach beendeter Umsetzung anfallenden Reaktionsgemisches bereitet keine Schwierigkeiten. Das

erfindungsgemäße Verfahren stellt somit eine wertvolle Bereicherung der Technik dar.

Verwendet man als Ausgangsstoffe beispielsweise 2-Acetamino-4-methylthio-butansäure-ethylester (»Acetyl-methionin-ethylester«), Dimethylsulfat und Kalium-ethylat, so kann der Reaktionsablauf beim erfindungsgemäßen Verfahren durch folgendes Formelschema skizziert werden:

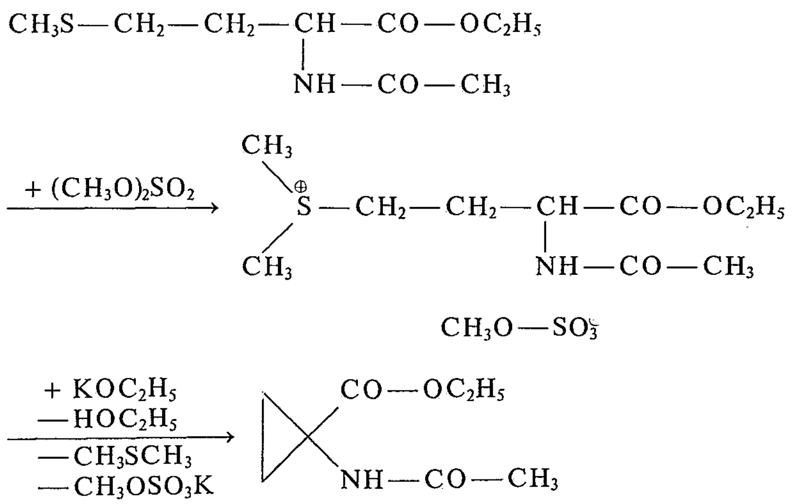


Die als Ausgangsstoffe zu verwendenden 2-Acylamino-4-methylthio-butansäureester sind durch Formel (II) definiert. Vorzugsweise stehen darin

$R^3$ für Methyl und
$R^4$ für Alkyl mit 1 bis 4 Kohlenstoffatomen.

Als Beispiele seien 2-Acetamino-4-methylthio-butansäure-methylester, -ethylester, -n-propylester, -iso-propylester, -n-butylester, -iso-butylester, -sek.-butylester und -tert.-butylester genannt.

2-Acylamino-4-methylthio-butansäureester der Formel (II) sind bereits bekannt oder lassen sich nach im Prinzip bekannten Verfahren in einfacher Weise herstellen (vergleiche US-PS 3 963 573).

Als Alkalialkoholate, welche bei der Durchführung des erfindungsgemäßen Verfahrens weiterhin als Ausgangsstoffe benötigt werden, kommen vorzugsweise Natrium- oder Kalium-Salze von Alkoholen mit 1 bis 4 Kohlenstoffatomen in Frage. Speziell genannt seinen Natrium- und Kaliummethylat, -ethylat, -n- und -iso-propylat, -n-, -iso-, -sek.- und -tert.-butylat.

Als Verdünnungsmittel kommen für die erfindungsgemäße Umsetzung vorzugsweise polare organische Solventien in Betracht. Hierzu gehören insbesondere Alkohole, wie z. B. Methanol, Ethanol, n- und iso-Propanol, n-, iso-, sek.- und tert.-Butanol, aber auch aprotische Lösungsmittel, wie z. B. Dimethylformamid, Dimethylsulfoxid und Tetrahydrofuran.

Als Alkalihydroxide bzw. Erdalkalihydroxide, die zur Verseifung der bei dem erfindungsgemäßen Verfahren anfallenden Verbindungen verwendet werden, seien Natriumhydroxid, Kaliumhydroxid und Calziumhydroxid speziell genannt.

Die Reaktionstemperaturen können bei der Durchführung des erfindungsgemäßen Verfahrens in einem größeren Bereich variiert werden. Im allgemeinen arbeitet man bei Temperaturen zwischen 80°C und 150°C, vorzugsweise zwischen 90°C und 120°C. Auch bei der gegebenenfalls durchzuführenden Verseifung können die Reaktionstemperaturen in einem größeren Bereich varriert werden. Im allgemeinen arbeitet man bei der Verseifung bei Temperaturen zwischen 70°C und 150°C, vorzugsweise zwischen 80°C und 120°C. Bei der Überführung der Verseifungsprodukte in die entsprechenden Hydrochloride und bei der anschließenden Behandlung mit Propylenoxid können die Reaktionstemperaturen innerhalb eines bestimmten Bereiches variiert werden. Im allgemeinen arbeitet man bei der Herstellung der Hydrochloride bei Temperaturen zwischen 0°C und 30°C, vorzugsweise zwischen 5°C und 20°C. Die Behandlung mit Propylenoxid erfolgt im allgemeinen bei Temperaturen zwischen −5°C und +20°C, vorzugsweise zwischen 0°C und 10°C.

Das erfindungsgemäße Verfahren wird im allgemeinen unter Normaldruck durchgeführt. Es ist jedoch auch möglich, bei einem dem Dampfdruck des benutzten Verdünnungsmittels bei der Reaktionstemperatur angepaßten Druck zu arbeiten.

Bei der Durchführung des erfindungsgemäßen Verfahrens setzt man auf 1 Mol 2-Acylamino-4-methylthio-butan-säureester der Formel (II) 1 bis 2 Mol, vorzugsweise 1,1 bis 1,5 Mol, Dimethylsulfat und 1 bis 2 Mol, vorzugsweise 1,1 bis 1,5 Mol, Alkalialkoholat ein.

Die Isolierung der Reaktionsprodukte erfolgt nach üblichen Methoden. Im allgemeinen verfaährt man in der Weise, daß man das Reaktionsgemisch nach dem Erkalten mit einem in Wasser wenig löslichen organischen Lösungsmittel versetzt, die organische Phase abtrennt, mit Wasser wäscht und nach vorherigem Trocknen einengt, wobei das Reaktionsprodukt als öliger Rückstand oder als

kristalline Substanz verbleibt.

In einer bevorzugten Ausführungsform des erfindungsgemäßen Verfahrens werden die Ausgangsverbindungen der Formel (II), gegebenenfalls Schmelzen, vorgelegt und mit Dimethylsulfat tropfenweise versetzt. Anschließend wird die Lösung eines Alkalialkoholats in einem der oben angegebenen Lösungsmittel zugetropft und das Reaktionsgemisch bei der erforderlichen Temperatur, gegebenenfalls unter Rückfluß des Lösungsmittels, längere Zeit gerührt. Die Aufarbeitung erfolgt dann in der oben angegebenen Weise.

Wenn die bei dem erfindungsgemäßen Verfahren anfallenden 1-Acylamino-cyclopropan-carbonsäureester verseift werden sollen, dann geschieht dies dadurch, daß man das jeweilige Produkt zunächst mit einem Überschuß an wäßrigem Alkalihydroxid oder Erdalkalihydroxid verseift. Danach wird das Reaktionsgemisch unter Kühlung mit konzentrierter wäßriger Salzsäure angesäuert und bis zur Trockne eingedampft. Man nimmt das verbleibende Produkt in Methanol oder Ethanol auf und filtriert die ungelösten Bestandteile ab. Anschließend engt man das Filtrat bis zur Trockne ein, wobei das Hydrochlorid der 1-Amino-cyclopropancarbonsäure verbleibt. Soll letzteres in die freie 1-Amino-cyclopropancarbonsäure überführt werden, so nimmt man es in Methanol auf und versetzt mit Propylenoxid. Die 1-Amino-cyclopropancarbonsäure fällt dabei als kristallines Produkt an, das sich abfiltrieren läßt.

Die Isolierung des 1-Amino-cyclopropancarbonsäure-hydrochlorids ist nicht zwingend. Es ist vielmehr auch möglich, die 1-Amino-cyclopropancarbonsäure dadurch zu erhalten, daß man eine methanolische Lösung des 1-Amino-cyclopropancarbonsäure-hydrochlorids unmittelbar mit Propylenoxid versetzt.

Die erfindungsgemäß herstellbaren Wirkstoffe greifen in den Metabolismus der Pflanzen ein und können dehsalb als Wachstumsregulatoren eingesetzt werden.

Für die Wirkungsweise von Pflanzenwachstumsregulatoren gilt nach der bisherigen Erfahrung, daß ein Wirkstoff auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in bestimmter gewünschter Weise beeinflussen.

Pflanzenwuchsregulierende Stoffe können zum Beispiel zur Hemmung des vegetativen Wachstums der Pflanzen eingesetzt werden. Eine derartige Wuchshemmung ist unter anderem bei Gräsern von wirtschaftlichem Interesse, denn dadurch kann die Häufigkeit der Grasschnitte in Ziergärten, Park- und Sportanlagen, an Straßenrändern, auf Flughäfen oder in Obstanlagen reduziert werden. Von Bedeutung ist auch die Hemmung des Wuchses von krautigen und holzigen Pflanzen an Straßenrändern und in der Nähe von Pipelines oder Überlandleitungen oder ganz allgemein in Bereichen, in denen ein starker Zuwachs der Pflanzen unerwünscht ist.

Wichtig ist auch die Anwendung von Wachstumsregulatoren zur Hemmung des Längenwachstums von Getreide. Hierdurch wird die Gefahr des Umknickens (»Lagerns«) der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt. Die Anwendung von Wachstumsregulatoren zur Halmverkürzung und Halmverstärkung erlaubt es, höhere Düngermengen auszubringen, um den Ertrag zu steigern, ohne daß die Gefahr besteht, daß das Getreibe lagert.

Eine Hemmung des vegetativen Wachstums ermöglicht bei vielen Kulturpflanzen eine dichtere Anpflanzung, so daß Mehrerträge, bezogen auf die Bodenfläche, erzielt werden können. Ein Vorteil der so erzielten kleineren Pflanzen ist auch, daß die Kultur leichter bearbietet und beerntet werden kann.

Eine Hemmung des vegetativen Wachstums der Pflanzen kann auch dadurch zu Ertragssteigerungen führen, daß die Nährstoffe und Assimilate in stärkerem Maße der Blüten- und Fruchtbildung zugute kommen als den vegetativen Pflanzenteilen.

Mit Wachstumsregulatoren läßt sich häufig auch eine Förderung des vegetativen Wachstums erzielen. Dies ist von großem Nutzen, wenn die vegetativen Pflanzenteile geerntet werden. Eine Förderung des vegetativen Wachstums kann aber auch gleichzeitig zu einer Förderung des generativen Wachstums führen, dadurch, daß mehr Assimilate gebildet werden, so daß mehr oder größere Früchte entstehen.

Ertragssteigerungen können in manchen Fällen durch einen Eingriff in den pflanzlichen Stoffwechsel erreicht werden, ohne daß sich Änderungen des vegetativen Wachstums bemerkbar machen. Ferner kann mit Wachstumsregulatoren eine Veränderung der Zusammensetzung der Pflanzen erreicht werden, was wiederum zu einer Qualitätsverbesserung der Ernteprodukte führen kann. So ist es beispielsweise möglich, den Gehalt an Zucker in Zuckerrüben, Zuckerrohr, Ananas sowie in Zitrusfrüchten zu erhöhen oder den Proteingehalt in Soja oder Getreide zu steigern. Auch ist es beispielsweise möglich, den Abbau erwünschter Inhaltsstoffe, wie z. B. Zucker in Zuckerrüben oder Zuckerrohr, mit Wachstumsregulatoren vor oder nach der Ernte zu hemmen. Außerdem läßt sich die Produktion oder der Abfluß von sekundären Pflanzeninhaltstoffen positiv beeinflussen. Als Beispiel sei die Stimulierung des Latexflusses bei Gummibäumen genannt.

Unter dem Einfluß von Wachstumsregulatoren kann es zur Ausbildung parthenokarper Früchte

kommen. Ferner kann das Geschlecht der Blüten beeinflußt werden. Auch kann eine Sterilität des Pollens erzeugt werden, was der Züchtung und Herstellung von Hybridsaatgut eine große Bedeutung hat.

Durch den Einsatz von Wachstumsregulatoren läßt sich die Verzweigung der Pflanzen steuern. Einerseits kann durch Brechen der Apikaldominanz die Entwicklung von Seitentrieben gefördert werden, was besonders im Zierpflanzenbau auch in Verbindung mit einer Wuchshemmung sehr erwünscht sein kann. Andererseits ist es aber auch möglich, das Wachstum der Seitentriebe zu hemmen. Für diese Wirkung besteht z. B. großes Interesse im Tabakbau oder bei der Anpflanzung von Tomaten.

Unter dem Einfluß von Wachstumsregulatoren kann der Blattbestand der Pflanzen so gesteuert werden, daß ein Entblättern der Pflanzen zu einem gewünschten Zeitpunkt erreicht wird. Eine derartige Entlaubung spielt bei der mechanischen Beerntung der Baumwolle eine große Rolle, ist aber auch in anderen Kulturen, wie z. B. im Weinbau, zur Erleichterung der Ernte von Interesse. Eine Entlaubung der Pflanzen kann auch vorgenommen werden, um die Transpiration der Pflanzen vor dem Verpflanzen herabzusetzen.

Ebenso läßt sich mit Wachstumsregulatoren der Fruchtfall steuern. Einerseits kann ein vorzeitiger Fruchtfall verhindert werden. Andererseits kann aber auch der Fruchtfall oder sogar das Abfallen der Blüten bis zu einem gewünschten Maße gefördert werden (»Ausdünnung«), um die Alternanz zu brechen. Unter Alternanz versteht man die Eigenart einiger Obstarten, endogen bedingt von Jahr zu Jahr sehr unterschiedliche Erträge zu bringen. Schließlich ist es möglich, mit Wachstumsregulatoren zum Zeitpunkt der Ernte die zum Ablösen der Früchte erforderlichen Kräfte zu reduzieren, um eine mechanische Beerntung zu ermöglichen oder eine manuelle Beerntung zu erleichtern.

Mit Wachstumsregulatoren läßt sich ferner eine Beschleunigung oder auch Verzögerung der Reife des Erntegutes vor oder auch nach der Ernte erreichen. Dieses ist von besonderem Vorteil, weil sich dadurch eine optimale Anpassung an die Bedürfnisse des Marktes herbeiführen läßt. Weiterhin können Wachstumsregulatoren in manchen Fällen die Fruchtausfärbung verbessern. Darüber hinaus kann mit Wachstumsregulatoren auch eine zeitliche Konzentrierung der Reife erzielt werden. Damit werden die Voraussetzungen dafür geschaffen, daß z. B. bei Tabak, Tomaten oder Kaffee eine vollständige mechanische oder manuelle Beerntung in einem Arbeitsgang vorgenommen werden kann.

Durch Anwendung von Wachstumsregulatoren kann ferner die Samen- oder Knospenruhe der Pflanzen beeinflußt werden, so daß die Pflanzen, wie z. B. Ananas oder Zierpflanzen in Gärtnereien, zu einem Zeitpunkt keimen, austreiben oder blühen, an dem sie normalerweise hierzu keine Bereitschaft zeigen. Eine Verzögerung des Austriebes von Knospen oder der Keimung von Samen mit Hilfe von Wachstumsregulatoren kann in frostgefährdeten Gebieten erwünscht sein, um Schädigungen durch Spätfröste zu vermeiden.

Schließlich kann mit Wachstumsregulatoren eine Resistenz der Pflanzen gegen Frost, Trockenheit oder hohen Salzgehalt des Bodens induziert werden. Hierdurch wird die Kultivierung von Pflanzen in Gebieten möglich, die hierzu normalerweise ungeeignet sind.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut sowie ULV-Formulierungen.

Diese Formulierungen werden in bekannter Weise dargestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, sowie Wasser. Mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid. Als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie Hochdisperse Kieselsäure, Aluminiumoxid und Silikate. Als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z. B. nichtionogene und anionische Emulgatoren, wie Polyoxyethylen-Fettsäureester, Polyoxyethylen-Fettalkoholether, z. B. Alkylarylpolyglycol-ether, Alkylsulfonate, Alkylsulfate, Arylsulfonate sowie Eiweißhydrolysate. Als Dispergiermittel kommen in Frage: z. B. Lignin-Sulfitablagen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azol-Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäß herstellbaren Wirkstoffe können in den Formulierungen in Mischung mit anderen bekannten Wirkstoffen vorliegen, wie Fungizide, Insektizide, Akarizide und Herbizide, sowie in Mischungen mit Düngemitteln und anderen Wachstumsregulatoren.

Die Wirkstoffe können als solche, in Form ihrer Formulierungen oder der daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z. B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Die Aufwandmengen können in einem größeren Bereich variiert werden. Im allgemeinen verwendet man pro Hektar Bodenfläche 0,01 bis 50 kg, bevorzugt 0,05 bis 10 kg, an Wirkstoff.

Für die Anwendungszeit gilt, daß die Anwendung der Wachstumsregulatoren in einem bevorzugten Zeitraum vorgenommen wird, dessen genaue Abgrenzung sich nach dem klimatischen und vegetativen Gegebenheiten richtet.

Die wachstumsregulierende Wirksamkeit der erfindungsgemäß herstellbaren Stoffe geht aus dem nachfolgenden Beispiel hervor.

## Beispiel A

### Stimulation der Äthylenbiosynthese

| | | |
|---|---|---|
| Lösungsmittel: | 30 Gewichtsteile | Dimethylformamid |
| Emulgator: | 1 Gewichtsteil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Aus Sojabohnenblättern werden Blattstücke gleicher Größe gestanzt. In Petrischalen, die mit 10 ml der Wirkstoffzubereitungen bzw. entsprechender Kontroll-Lösungen ohne Wirkstoffe gefüllt sind, wird jeweils eine konstante Zahl Blattstücke 1 Stunde lang inkubiert. Anschließend werden die Blattstücke zusammen mit 1 ml der jeweiligen Wirkstoffzubereitung bzw. Kontrollösung in luftdicht abgeschlossene Gefäße gegeben. Nach 24 Stunden wird das Äthylen, das sich in den Gefäßen angesammelt hat, mit üblichen Nachweismethoden bestimmt. Die Äthylenentwicklung der mit Wirkstoffzubereitung behandelten Blattstücke wird mit der Äthylenentwicklung der Kontrollen verglichen.

In der nachfolgenden Tabelle bedeuten:

0 keine Wirkung
\+ schwache Stimulation der Äthylenbiosynthese
\+ + mittlere Stimulation der Äthylenbiosynthese
\+ + + starke Stimulation der Äthylenbiosynthese

Dieser Test ist in besonderem Maße geeignet, die wachstumsregulierenden Eigenschaften der erfindungsgemäßen Verbindungen zu verdeutlichen.

Das Pflanzenhormon Äthylen greift in zahlreiche Prozesse bei der Entwicklung der Pflanzen ein. Eine Erhöhung der Äthylenbiosynthese, wie sie mit den erfindungsgemäßen Substanzen erzielt werden kann, erlaubt es, diese Prozesse zu steuern. Als Beispiele, für die ein besonderes kommerzielles Interesse besteht, seien hier genannt: Fruchablösung, Reifebeschleunigung von Früchten und Blättern, Blühinduktion, Samenkeimung, Fruchtausdünnung, Stimulation des Latexflusses z. B. bei Hevea, Geschlechtsbeeinflussung und Wuchshemmung z. B. auch, um das Lagern von Getreide zu verhindern.

Die Wirkstoffe und die Resultate gehen aus der nachfolgenden Tabelle hervor.

Tabelle A

Stimulation der Ethylenbiosynthese

| Wirkstoff | Wirkstoff-konzentration in % | Wirkung |
|---|---|---|
| 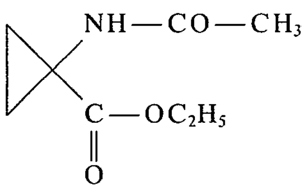 (1) | 0,001 | +++ |
| 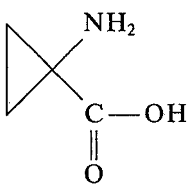 (2) | 0,001 | +++ |
| – (Kontrolle) | – | O |

## Herstellungsbeispiele

### Beispiel 1

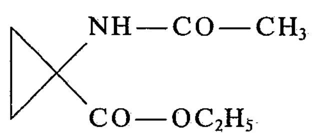

Zu 20,5 g (0,1 Mol) geschmolzenem DL-N-Acetyl-methionin-methylester läßt man bei 110°C sehr langsam 16,4 g (0,13 Mol) Dimethylsulfat zutropfen. Nach Beendigung der Zugabe wird noch 5 Minuten nachgerührt. Anschließend tropft man eine Natriummethylatlösung, hergestellt aus 50 ml Ethanol und 2,76 g (0,12 Mol) Natrium, hinzu und erhitzt 25 Stunden unter Rückfluß. Danach filtriert man und engt das Filtrat ein. Der Rückstand wird in 150 ml Chloroform aufgenommen und mit 50 ml Wasser gewaschen. Man trennt die organische Phase ab, trocknet mit Natriumsulfat und engt ein. Nach dem Andestillieren verbleiben 16 g (93,5% der Theorie) eines Öls, das nach GC-Analyse zu 80% aus 1-N-Acetylaminocyclopropan-1-carbonsäureethylester besteht.

### Beispiel 2

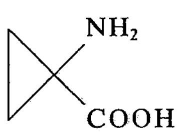

a) Ein Gemisch aus 17,1 g (0,1 Mol) 1-N-Acetylcyclopropan-1-carbonsäureethylester, 19,6 g (0,35 Mol) Calciumhydroxid und 60 ml Wasser wird 12 Stunden lang unter Rückfluß erhitzt. Nach dem Abkühlen wird das Reaktionsgemisch unter Eiskühlung mit konzentrierter Salzsäure angesäuert und zur Trockne eingedampft. Man nimmt den Rückstand in Ethanol auf, filtriert von unlöslichen Bestandteilen ab und zieht das Lösungsmittel unter vermindertem Druck ab. Nach dem Trocknen des Rückstandes verbleiben 13,5 g (98% der Theorie) an 1-Aminocyclopropan-1-carbonsäure-hydrochlorid.

b) Eine Lösung von 13,8 g (0,1 Mol) 1-Aminocyclopropan-1-carbonsäure-hydrochlorid in 20 ml Methanol wird unter Eiskühlung und intensivem Rühren tropfenweise mit 8,7 g (0,15 Mol) Propylenoxid versetzt. Nach wenigen Minuten beginnt die freie 1-Amino-cyclopropan-1-carbonsäure auszukristallisieren. Zur Vervollständigung der Kristallisation läßt man das Reaktionsgemisch über Nacht bei Temperaturen zwischen 0°C und 4°C stehen. Nach dem Abfiltrieren und Trocknen erhält man 9,6 g (95% der Theorie) an 1-Amino-cyclopropan-1-carbonsäure.

**Patentansprüche**

1. Verfahren zur Herstellung von 1-Amino-cyclopropan-carbonsäure und deren Derivaten der Formel

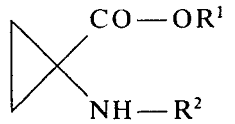

(I)

in welcher

$R^1$ für Wasserstoff oder Alkyl steht und
$R^2$ für Wasserstoff oder einen Rest $-CO-R^3$ steht,
worin $R^3$ für Wasserstoff, Alkyl, Aryl oder Alkoxy steht,

dadurch gekennzeichnet, daß man 2-Acylamino-4-methylthio-butansäureester der Formel

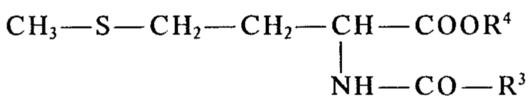

(II)

in welcher

$R^3$ die oben angegebene Bedeutung hat und
$R^4$ für Alkyl steht,

nacheinander mit Dimethylsulfat und einem Alkalialkoholat gegebenenfalls in Gegenwart eines Verdünnungsmittels bei Temperaturen zwischen 80°C und 150°C umsetzt, gegebenenfalls anschließend mit wäßrigem Alkalihydroxid oder Erdalkalihydroxid bei Temperaturen zwischen 70°C und 150°C verseift, das dabei anfallende Reaktionsgemisch bei Temperaturen zwischen 0°C und 30°C mit konzentrierter Salzsäure ansäuert und das entstehende Hydrochlorid dann in methanolischer Lösung bei Temperaturen zwischen −5°C und +20°C mit Propylenoxid behandelt.

2. Verfahren gemäß Anspruch 1, dadurch gekennzeichnet, daß man die Umsetzung bei Temperaturen zwischen 90°C und 120°C durchführt.

3. Verfahren gemäß Anspruch 1, dadurch gekennzeichnet, daß man auf 1 Mol 2-Acylamino-4-methylthio-butansäureester der Formel (II) 1 bis 2 Mol Dimethylsulfat und 1 bis 2 Mol Alkalialkoholate einsetzt.

4. Verfahren gemäß Anspruch 1, dadurch gekennzeichnet, daß man Natrium- oder Kalium-Salze von Alkoholen mit 1 bis 4 Kohlenstoffatomen als Alkalialkoholate einsetzt.

5. Verfahren gemäß Anspruch 1, dadurch gekennzeichnet, daß man die Verseifung bei Temperaturen zwischen 80°C und 120°C durchführt.

6. Verfahren gemäß Anspruch 1, dadurch gekennzeichnet, daß man die Hydrochlorid-Bildung bei Temperaturen zwischen 5°C und 20°C durchführt.

7. Verfahren gemäß Anspruch 1, dadurch gekennzeichnet, daß man die Behandlung von Hydrochlorid mit Propylenoxid bei Temperaturen zwischen 0°C und 10°C durchführt.

8. Verfahren gemäß Anspruch 1, dadurch gekennzeichnet, daß man als Ausgangsstoff der Formel (II) D,L-N-Acetyl-methionin-methylester einsetzt.

9. Verfahren gemäß Anspruch 1, dadurch gekennzeichnet, daß man geschmolzenen D,L-N-Acetyl-methionin-methylester nacheinander mit Dimethylsulfat und Natriumethylat umsetzt, anschließend mit wäßrigem Calciumhydroxid verseift, dann mit konzentrierter Salzsäure ansäuert und das entstehende Hydrochlorid in methanolischer Lösung mit Propylenoxid behandelt.

## Claims

1. Process for the preparation of 1-amino-cyclopropane-carboxylic acid and derivatives thereof, of the formula

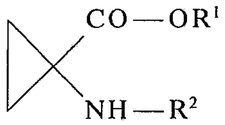

(I)

in which

$R^1$ represents hydrogen or alkyl and
$R^2$ represents hydrogen or a radical $-CO-R^3$,
wherein $R^3$ represents hydrogen, alkyl, aryl or alkoxy,

characterised in that 2-acylamino-4-methylthio-butanoic acid esters of the formula

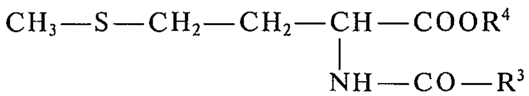

(II)

in which

$R^3$ has the meaning indicated above and
$R^4$ represents alkyl,

are reacted successively with dimethyl sulphate and an alkali metal alcoholate, if appropriate in the presence of a diluent, at tempratures between 80° C and 150° C, the product is then optionally saponified with aqueous alkali metal hydroxide or alkaline earth metal hydroxide at temperatures between 70° C and 150° C, the reaction mixture thereby obtained is acidified with concentrated hydrochloric acid at temperatures between 0° C and 30° C, and the hydrochloride formed is then treated, in methanolic solution, with propylene oxide at temperatures between −5° C and +20° C.

2. Process according to claim 1, characterised in that the reaction is carried out at temperatures between 90° C and 120° C.

3. Process according to claim 1, characterised in that 1 to 2 mols of dimethyl sulphate and 1 to 2 mols of alkali metal alcoholates are employed per 1 mol of 2-acylamino-4-methylthio-butanoic acid ester of the formula (II).

4. Process accorging to claim 1, characterised in that the sodium or potassium salts of alcohols with 1 to 4 carbon atoms are employed as the alkali metal alcoholates.

5. Process according to claim 1, characterised in that the saponification is carried out at temperatures between 80° C and 120° C.

6. Process according to claim 1, characterised in that the hydrochloride formation is carried out at temperatures between 5° C and 20° C.

7. Process according to claim 1, characterised in that the treatment of the hydrochloride with propylene oxide is carried out at temperatures between 0° C and 10° C.

8. Process according to claim 1, characterised in that D,L-N-acetyl-methionine methyl ester is employed as the starting substance of the formula (II).

9. Process according to claim 1, characterised in that molten D,L-N-acetyl-methionine methyl ester is reacted successively with dimethyl sulphate and sodium ethylate, the product is subsequently saponified with aqueous calcium hydroxide, the mixture is then acidified with concentrated hydrochloric acid and the hydrochloride formed is treated, in methanolic solution, with propylene oxide.

## Revendications

1. Procédé de préparation d'acide 1-amino-cyclopropane-carboxylique et de ses dérivés répondant à la formule:

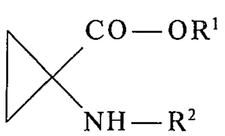

(I)

dans laquelle

$R^1$ représente un atome d'hydrogene ou un groupe alkyle, et
$R^2$ représente un atome d'hydrogène ou un radical $-CO-R^3$ où
$R^3$ représente un atome d'hydrogène, un groupe alkyle, aryle ou alcoxy,

caractérisé en ce qu'on fait réagir des esters d'acide 2-acylamino-4-méthylthio-butanoique de formule:

$$CH_3-S-CH_2-CH_2-\underset{\displaystyle NH-CO-R^3}{\underset{|}{CH}}-COOR^4 \qquad (II)$$

dans laquelle

$R^3$ a la signification indiquée ci-dessus, et
$R^4$ représente un groupe alkyle,

successivement avec du sulfate de diméthyle et un alcoolate d'un métal alcalin, éventuellement en présence d'un diluant, à des températures comprises entre 80 et 150° C, pour porcéder ensuite éventuellement à une saponification avec un hydroxyde aqueux d'un métal alcalin ou alcalino-terreux à des températures comprises entre 70 et 150° C, le mélange réactionnel ainsi formé étant ensuite acidifié avec de l'acide chlorhydrique concentré à des températures comprises entre 0 et 30° C, tandis que l'on traite alors le chlorhydrate ainsi formé en solution méthanolique avec de l'oxyde de propylène à des températures comprises entre $-5$ et $+20$° C.

2. Procédé suivant la revendication 1, caractérisé en ce qu'on effectue la réaction à des températures comprises entre 90 et 120° C.

3. Procédé suivant la revendication 1, caractérisé en ce que, pour 1 mole d'ester d'acide 2-acylamino-4-méthylthio-butanoique de formule (II), on utilise 1 à 2 moles de sulfate de diméthyle et 1 à 2 moles d'alcoolates de métaux alcalins.

4. Procédé suivant la revendication 1, caractérisé en ce que, comme alcoolates de métaux alcalins, on utilise des sels de sodium ou de potassium d'alcools contenant 1 à 4 atomes de carbone.

5. Procédé suivant la revendication 1, caractérisé en ce qu'on effectue la saponification à des températures comprises entre 80 et 120° C.

6. Procédé suivant la revendication 1, caractérisé en ce qu'on effectue la formation de chlorhydrate à des températures comprises entre 5 et 20° C.

7. Procédé suivant la revendication 1, caractérisé en ce qu'on effectue le traitement du chlorhydrate avec l'oxyde de propylène à des températures comprises entre 0 et 10° C.

8. Procédé suivant la revendication 1, caractérisé en ce que, comme substance de départ de formule (II), on utilise l'ester méthylique de D,L-N-acétyl-méthionine.

9. Procédé suivant la revendication 1, caractérisé en ce qu'on fait réagir l'ester méthylique de D,L-N-acétyl-méthionine à l'état fondu, successivement avec du sulfate de diméthyle et de l'éthylate de sodium, puis on saponifie avec de l'hydroxyde de calcium aqueux et ensuite, on acidifie avec de l'acide chlorhydrique concentré et on traite le chlorhydrate obtenu en solution méthanolique avec de l'oxyde de propylène.